# EUROPEAN PATENT SPECIFICATION

(11) **EP 2 712 486 B1**
(45) Date of publication and mention of the grant of the patent: **13.12.2017**
(21) Application number: 12728427.1
(22) Date of filing: 29.05.2012
(51) Int. Cl.: H04W 28/02, H04W 28/10, H04W 28/20, H04W 28/22, H04W 92/04, H04W 92/20

(54) **METHOD AND SYSTEM FOR DATA COMMUNICATION IN HIERARCHICALLY STRUCTURED NETWORK**
VERFAHREN UND SYSTEM ZUR DATENKOMMUNIKATION IN EINEM HIERARCHISCH STRUKTURIERTEN NETZ
PROCÉDÉ ET SYSTÈME POUR LA TRANSMISSION DE DONNÉES DANS UN RÉSEAU STRUCTURÉ HIÉRARCHIQUEMENT

(43) Date of publication of application: 02.04.2014
(73) Proprietor: NEC Corporation, Tokyo 108-8001 (JP)
(72) Inventor: ROST, Peter, 69124 Heidelberg (DE); SCHOELLER, Marcus, 76709 Kronau (DE)
(74) Representative: Patent- und Rechtsanwälte Ullrich & Naumann
(86) International application number: PCT/EP2012/060040
(87) International publication number: WO 2013/178250

(56) References cited:
- EP-A1- 2 434 801
- US-A1- 2010 214 977
- US-A1- 2010 296 497
- US-A1- 2011 228 673
- YIQING ZHOU ET AL: "Broadband wireless communications on high speed trains", WIRELESS AND OPTICAL COMMUNICATIONS CONFERENCE (WOCC), 2011 20TH ANNUAL, IEEE, 15 April 2011 (2011-04-15), pages 1-6, XP031944468, DOI: 10.1109/WOCC.2011.5872303 ISBN: 978-1-4577-0453-6

## Description

The invention relates to a method for data communication in a hierarchically structured network comprising at least two lower level entities on a lower level, at least one higher level entity on a higher level, wherein each higher level entity provides lowlink connections to each of the lower level entities and highlink connections to at least one further high level entity wherein a lower level entity, the higher level entity connected to the said low level entity and the high level entity connected to said higher level entity defines a connection branch.

The invention relates also to a system for data communication in a hierarchically structured network, comprising at least two lower level entities on a lower level, at least one higher level entity on a higher level, wherein each higher level entity provides lowlink connections to each of the lower level entities and highlink connections to at least one further high level entity wherein a lower level entity, the higher level entity connected to the said low level entity and the high level entity connected to said higher level entity defines a connection branch.

Also applicable to a computer network in general the present invention will be described with regard to hierarchically structured wireless mobile networks connected to the internet.

Wireless networks for example in home user deployments have a more and more increasing data transmission rate starting a few years ago from 11 Mbit/s up to 300 Mbit/s today. However, when accessing the internet, home users for example may use a DSL connection to connect to their internet service provider. DSL connections as backhaul connection have limited data transmission capabilities due to the underlying fairly old connection technique: The connection of the "last mile", i.e. the connection between the user's home and a DSLAM in a communication switching center is based on copper twin-wires. Another example of a connection with limited data transmission rates are wireless aggregation networks with a shared backhaul.

Current wireless link configuration mechanisms try to maximize a data throughput or a data transmission rate on the wireless link, for example between a user's notebook and an access point within a user home network. This requires the use of sophisticated codes and dense modulations. However, in both cases the high data transmission rate between a notebook as a mobile station and a corresponding access point for the mobile station may not be used to the full by applications running on the mobile station since the connection path over the backhaul network, in particular the DSL connection to the internet, provides significantly a lower data transmission rate.

In US 2010/0214977 A1 is shown a method for managing femto-cells. When for example a mobile station enters a femto-cell the communication capability of a backhaul internet service provider connection of the femto-cell is determined. A corresponding messaging element defining the backhaul connection communication capability is created and "built-in" in policy rules for managing of the femto-cell. The information about the communication capability of the backhaul connection is then provided to a macro-layer network to deallocate reserved macro-cell bandwidth of the macro-cell network.

However, this method has certain drawbacks. One of the disadvantages is, that an adaption of the data communication capabilities of the user equipment is only performed when entering a coverage area of a femto-cell. Another disadvantage is, that when a plurality of user equipment accesses the backhaul communication via a common access point data rates may be further decreased due to a use of the same resources in the wireless spectrum of the common access point resulting in an energy increase in the corresponding interface for compensation.

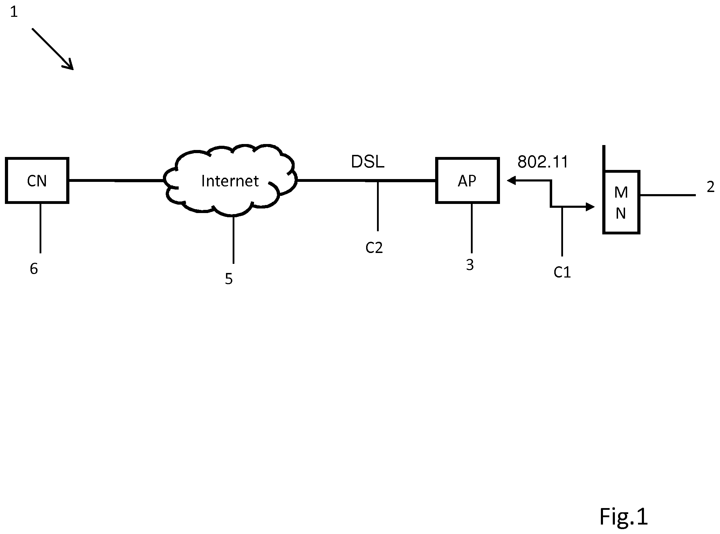

In US 2010/0296497 A1 a communication system comprising femtocells, access points and/or endpoint devices is disclosed and with a hybrid network controller for the femtocells and access points. In particular figures 1a and 1b show a wired and/or wireless communication backbone being connected via the so-called Hybrid Network Controller to the femtocells and access points, wherein the Hybrid Network Controller as well as the femtocell and access points are located in a sub network. The Hybrid Network Controller is connected to access points, femtocells and user equipment by a wired or wireless connection. Thus, the connection between the user equipment and an access point can be seen as a low-link connection whereas the connection between an access point of femtocell to the Hybrid Network Controller can be seen as a high-link connection. The Hybrid Network Controller exchanges information with access points and femtocells, for example data rates, modulation schemes resource allocations, error coding schemes and transmission power levels. The Hybrid Network Controller may manage for example one or more of load balancing between access points and femtocells, etc. based on information exchanged over the high-link connection.

In EP 2 434 801 A1 a wireless communication system, a wireless communication access point device and a control node are disclosed as well as a method for switching among a plurality of wireless communication systems for a wired line of a network side and a technique for system switching between a macrocell and a femtocell is disclosed. In more detail in Fig. 4a control node is connected via a network to a communication counter part. The control node is further connected via high link connections to two access points to which a user equipment can connect with a low link connection. The control node has a database where for each connection with an access point the communication bandwidth of the link between an user equipment and a corresponding access point is stored. When the bandwidth between an user equipment and a corresponding access point is larger than a bandwidth of the link between the corresponding access point and the control node then the control node generates a control signal for limiting the bandwidth of the link between the user equipment and the access point.

It is therefore an objective of the present invention to provide a method and a system for data communication in a hierarchically structured network with a reduced energy consumption for data transmission.

It is a further objective of the present invention to provide a method and a system for data communication in a hierarchically structured network having a greater flexibility in adapting to different network scenarios when using the method and the system.

An even further objective of the present invention is to provide a system and method for data communication in a hierarchically structured network which require less data traffic for performing the method.

In accordance with the invention the aforementioned objectives are accomplished by the method of claim 1 and the system according to claim 14. According to an example useful for understanding the invention the method for data communication in a hierarchically structured network comprising at least two lower level entities on a lower level, at least one higher level entity on a higher level, wherein each higher level entity provides lowlink connections to each of the lower level entities and highlink connections to at least one further high level entity wherein a lower level entity, the higher level entity connected to the said low level entity and the high level entity connected to said higher level entity defines a connection branch
is characterized by the steps
a) Determining communication capabilities of the lowlink and highlink connections in each connection branch,
b) Providing communication capability information according to the determined communication capabilities to the lower level entities,
c) Determining the connections in each connection branch having the lower one of the data communication capability, and
d) Adapting the data communication capabilities of the connections in each connection branch according to the determined lower data communication capability.

According to another example useful for understanding the invention the system for data communication in a hierarchically structured network, comprising at least two lower level entities on a lower level, at least one higher level entity on a higher level, wherein each higher level entity provides lowlink connections to each of the lower level entities and highlink connections to at least one further high level entity wherein a lower level entity, the higher level entity connected to the said low level entity and the high level entity connected to said higher level entity defines a connection branch
is characterized in that
at least one of the lower, higher and/or high level entities is operable, to determine communication capabilities of the lowlink and highlink connections in at least one connection branch, to provide communication capability information according to the determined communication capabilities to the lower level entities, to determine the connections in each connection branch having the lower one of the data communication capability, and to adapt the data communication capabilities of the connections in each connection branch according to the determined lower data communication capability.

According to another example useful for understanding the invention it has first been recognized, that intra-level interference between different entities on the same level and inter-level interference between a lower level entity and a relatively higher level entity is significantly reduced.

According to another example useful for understanding the invention it has also been first recognized that signal processing and output power of entities is reduced since simpler codes and modulations, in general data transmission or data link protocols may be used between the entities.

It has also been first recognized according to another example useful for understanding the invention that a pollution of the environment, in particular of the air medium, is reduced resulting in lower intra-level and/or inter-level interference. This further leads to fewer retransmissions and a further reduction in energy required for data transmission.

According to another example useful for understanding the invention it has further been first recognized that the invention provides a passive interference cooperation which may be performed by exchanging data which is scalable and of moderate size in contrast for example to interference exploitation through cooperation requiring at lot more data to be exchanged.

Further features, advantages and preferred embodiments are described in the following examples. According to another example useful for understanding the invention a high link connection is a backhaul connection, preferably a DSL-connection, having a lower data communication capability compared to a downlink connection. This provides a simple application of the method to basic home networks, preferably home WLAN networks.

According to another example useful for understanding the invention the determined data communication capabilities are exchanged amongst at least two entities on the same level in different connection branches, preferably via a direct link. One of the advantages is, that exchanging information of the determined data communication capabilities between entities on the same level in different connection branches provides an even better interference coordination leading indirectly to a further interference reduction between entities on the same level and also between entities on different levels. A direct link provides further an easy and explicit control of negotiations between two or more entities in different connection branches for multiplexing interference coordination, i.e. overall spectrum sharing or time slot coordination.

According to another example useful for understanding the invention data communication capability information is included in a DHCP message for the lower level entities and/or in a beacon frame. Data communication capability information, preferably a bandwidth of a backhaul link, may thus be easily provided to the lower level entities. New protocols, separate transmissions and/or channels are not necessary and therefore saving costs.

According to another example useful for understanding the invention the data communication capability information is provided to a MAC layer optimization algorithm. A MAC layer optimization algorithm provides a reliable and easy-to-implement method for coordinating interference and for reducing, preferably the bandwidth, as well as to adapt the data communication capability of the communication with a higher data communication capability to that one with the lower data communication capability.

According to another example useful for understanding the invention at least two different spectrum parts of an overall transmission spectrum for connections are determined such that at least two of the lowlink connections each provide adapted communication capabilities according to step d) and that each determined spectrum part is assigned to different connections, preferably lowlink connections. Entities may then easily use parts of the overall transmission spectrum which do not interfere with those parts of the overall transmission spectrum used by other entities. This implicit or passive interference coordination provides a minimum of data to be exchanged or analyzed for minimizing interference between two entities on the same and/or on different levels. This enables for example a mobile station connected to an access point to optimize the output power of its air interface, and when sharing the overall spectrum with other mobile stations connected to the same or to another access point to provide an optimized use of the overall transmission spectrum and avoids interference between different mobile stations on the same or on different levels of the network.

According to another example useful for understanding the invention spectrum part information is included in the communication capability information. This enables a fast and in particular even more efficient way to avoid interference without the need to exchange spectrum part information via a further connection and/or using further protocols.

According to another example useful for understanding the invention at least the higher level entities are time-synchronized, preferably by using a PTP-protocol. For example if the hierarchically structured network is a wireless LAN network having WLAN access points and for example a DSL backhaul connection from each WLAM access point to the Internet or a central node the WLAN access points may use an access point beacon frame which is extended carrying two new information blocks for example a backhaul link capacity block and a resource allocation block. A resource allocation block may contain information about the medium usage, for example time division multiple access or frequency division multiple access and indicate a flexibility of the allocation. In order to exploit information from frequency division multiple access in the resource allocation block the access points have to be tightly time-synchronized. This provides flexible and reliable coordination of interference between at least the lower intermediate level entities in form of the access points. The PTP-protocol is the precision time protocol which is standardized and therefore further reliable and widely used: PTPv2 is standardized in IEEE 1588-2008.

According to another example useful for understanding the invention lowlink and/or highlink connections are provided as wireless connections. Wireless connections provide a more flexible position of entities while providing stable and reliable connections.

According to another example useful for understanding the invention at least the steps a)-c) are repeated, preferably periodically. When for example the steps a) to c) are repeated periodically changing environmental conditions, for example further non-network interferences may be recognized and if necessary taken into account providing a flexible adaption of the data communication capabilities and interference reduction respectively avoidance in the hierarchically structured network.

According to another example useful for understanding the invention deep packet inspection and/or network layer protocol header inspection is performed, preferably by the lower intermediate level entities to determine data communication capabilities. Therefore, for example, the lower intermediate entities may use reliable methods to determine the data communication capabilities without having to use further devices or entities or have to rely on information of other entities. This provides a very reliable determination of the data communication capabilities of at least one of the connections. Even if for example corresponding information is provided to preferably the lower intermediate entities the lower intermediate level entities may confirm or change the corresponding information when adapting the data communication capabilities of the connection having greater data communication capabilities to the data communication capabilities of the connection having lower data communication capabilities according to the provided information.

According to another example useful for understanding the invention the communication capability information includes the maximum sending rate. This enables a reliable adaption of the communication capabilities according one of the key parameters which represent a connection.

According to another example useful for understanding the invention the communication capability information includes a time, frequency and/or code multiplexing scheme. When such schemes are included in the communication capability information coordination of different overall transmission spectrum parts may be performed much faster while being more precise. Measurements for extracting this information by other entities are not required, also a minimizing the energy consumption of these entities.

According to another example useful for understanding the invention transmission properties of air interfaces for wireless communication of the lower and/or higher level entities are adapted according to the exchanged data communication capabilities. When adapting the transmission properties of air interfaces, reduction of the energy consumption and a reduction of costs for operating the lower and/or higher level entities is possible. Also due to the reduction in energy in the air interfaces the air pollution with electromagnetic waves is reduced.

According to another example useful for understanding the invention steps a)-d) are performed by at least one centralized entity, wherein the centralized entity is at least on a higher network level. The term "centralized" means with regard to the term "level", that a entity on a higher level, i.e. the centralized entity, coordinates the execution of steps a)-d) for the entities on a lower level below the centralized entity. Of course it is possible that a plurality of a centralized entities coordinate that the execution of steps a)-d) for adapting connections to lower level entities. It is further possible, that different centralized entities exchange data communication capability information, for example via the backhaul connection to enhance usage of different transmission spectrum parts, etc..

According to another example useful for understanding the invention step a) is performed by inspecting network layer protocol headers for network congestion notification information. This provides an easy and reliable way to obtain network congestion information enabling to determine data communication capabilities in a more reliable way.

According to another example useful for understanding the invention future communication capabilities are calculated based on actual and/or past communication capabilities. This enables to determine future problems. For example such problems may arise when within regular time intervals data traffic increases due to more users connected to lower level entities. Therefore the data communication capabilities are adapted prior to an increased traffic, providing more stable connections and a sufficient transmission rate for each user.

There are several ways how to design and further developed the teaching of the present invention in an advantageous way. To this end it is to be referred to the patent claim subordinate to patent claim 1 and 14 on the one hand and the following explanation of preferred embodiments of the invention by way of example illustrating by the drawing on the other hand. In connection with the explanation of the preferred example of an embodiment of the invention by the aid of the drawing, generally preferred embodiments and further developments of the teaching will be explained. In the drawings
- Fig. 1: shows a schematical view of a hierarchically structured home network of a private user;
- Fig. 2: shows a schematical view of a system according to the present invention in a first embodiment; and
- Fig. 3: shows a schematical view of a system in a second embodiment according to the present invention.

Fig. 1 shows a schematical view of a hierarchically structured home network of a private user.

Fig. 1 shows a hierarchically structured network 1. A mobile node 2 is connected via a WLAN 802.11 connection C1 to an access point 3. The access point 3 is connected to the internet 5 via a DSL-connection C2. A mobile node 2 connects to a corresponding node 6 located in the internet 5. The bandwidth of the path from the access point 3 to the correspondent node 6 is assumed to be smaller than the maximum bandwidth of the wireless 802.11 link with which the wireless 802.11 link can be operated. The end-to-end connection between the mobile node 2 and the corresponding node 6 is backhaul-limited, i.e. the maximum achievable transmission rate between the mobile node 2 and the corresponding node 6 is given by the maximum data transmission rate achievable between access point 3 and corresponding node 6.

The access point 3 announces the maximum bandwidth to the mobile node 2 so that the mobile node 2 may use this information as an upper limit MAC layer throughput. In order to obtain the maximum data transmission rate for example to be provided to a MAC layer optimization algorithm the bandwidth of the end-to-end-connection may be announced or transmitted as part of a DHCP message. Another option is that the mobile node 2 may use congestion notification mechanisms on the network layer, for example ECN, re-ECN or LEDBAT to determine the data communication capabilities and to derive the connection with the lowest data transmission capabilities. The DSL-connection C2 has lower data transmission capabilities than the connection C1 between the mobile nodes 2 and the access point 3 as already mentioned. The access point 3 therefore adapts the data transmission capability between the mobile node 2 and the access point 3. This may lead to an energy saving, since a lower data communication capability may lead to a reduction in energy to be provided for the communication C1 between the mobile node 2 and the access point 3.

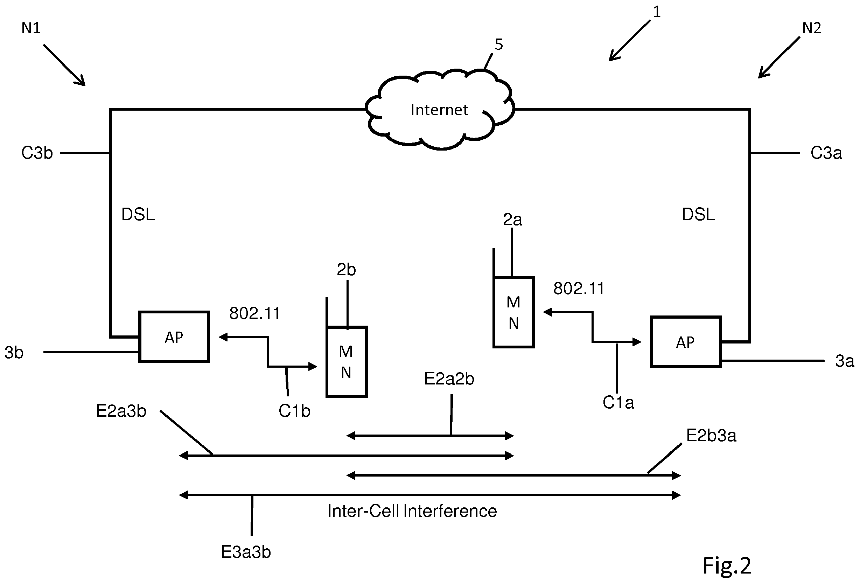

Fig. 2 shows a schematical view of a system according to the present invention in a first embodiment.

In Fig. 2 there is shown a mobile node 2a connected with the first connection C1a in form of a wireless 802.11 connection to an access point 3a. The access point 3a is connected via a second connection C3a in form of a DSL-connection to the internet 5. Further, a mobile node 2b is connected via first connection C1b in form of a wireless 802.11 connection to a second access point 3b. The second access point 3b is connected by a second connection C3b in form of a DSL-connection to the internet 5. The two access points 3a, 3b therefore provide wireless connectivity for two different networks N1, N2. Each of the access points 3a, 3b has information about its own backhaul-link capacity of respective second connections C3a, C3b. Further in Fig. 2 the access points 3a, 3b and/or the mobile nodes 2a, 2b may interfere which each other due to for example a close location of both access points 3a, 3b to each other. Such a close location may be realized by two home WLAN networks in different floors of a building.

As mentioned before for example mobile node 2a may cause intra-level interference E2a2b on the same level with mobile node 2b. Further access point 3a may cause intra-level interference E3a3b with access point 3b, also on the same level of the networks N1, N2. Further interference may also occur between devices on different levels: Mobile node 2a of network N1 may cause inter-level interference E2a3b with access point 2b of network N2 and mobile node 2b of network N2 may cause inter-level interference E2b3a with access point 3a of network N1. Each access point 3a, 3b may search for unused parts of the overall transmission spectrum of the WLAN networks N1, N2. For example due to the limited data communication capabilities of the backhaul connections C3a, C3b only a fraction or part of the overall transmission spectrum of WLAN connections needs to be used by each of the access points 3a, 3b. The access points 3a, 3b then each select different parts of the overall transmission spectrum and/or minimize the occupied or overlapping part of the overall transmission spectrum in order to avoid intra-level interference on the one hand on the same level with the other access point 3b, 3a and inter-level interference with the mobile nodes 2a, 2b of the corresponding other network N2, N1. In addition the access points 3a, 3b may adjust their energy consumption or power control to match the bandwidth of the first connection C1a, C1b to the bandwidth of the backhaul-connection C3a, C3b. In addition or alternatively the access points 3a, 3b may exchange information about the required maximum bandwidth for the corresponding first connections C1a, C2b corresponding to the bandwidth for the corresponding backhaul connections C3a, C3b by using a direct logical link. Based on this exchanged information about the required maximum bandwidth the access points 3a, 3b may negotiate for example a simple frequency-reuse plan in order to avoid inter-cell interference between cells of the access points 3a, 3b and further to minimize connection link failures between the access points 3a, 3b and the corresponding mobile nodes 2a, 2b providing a reduction of the number of retransmissions due to connection link failures.

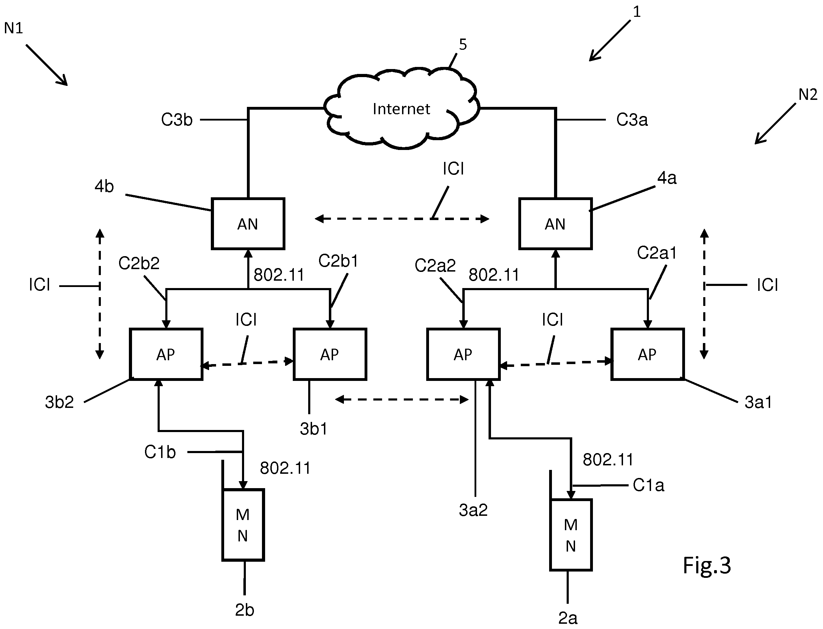

Fig. 3 shows a schematical view of a system in a second embodiment according to the present invention.

Fig. 3 shows a second network N2 comprising a plurality of access points 3a1, 3a2 which are connected via second connections C2a1, C2a2 to an aggregation node 4a. The aggregation node 4a is connected via a third connection C3a to the internet 5. A mobile node 2a is connected via a first connection C1a in form of a wireless 802.11 connection to access point 3a2. Of course other mobile nodes maybe connected to the same or other access points 3a1, 3a2 of the same network N2.

A first network N1 has a corresponding structure to the structure of second network N2: A mobile node 2b, two access points 3b1, 3b2 and aggregation node 4b. The mobile node 2b is connected to the access point 3b2 via a first connection C1b in form of a wireless 802.11 connection. Each of the access points 3b1, 3b2 is connected via a second connection C2b1, C2b2 in form of a wireless 802.11 connection to the aggregation node 4b. The aggregation node 4b is connected via a third connection C3b to the internet 5. Aggregation node 4b provides corresponding to aggregation node 4a of network N1 a backhaul for a plurality of access points 3b1, 3b2 using wireless connections C2b1, C2b2 between the aggregation node 4b and access points 3b1, 3b2.

The access points 3a1, 3a2 in network N2 and access points 3b1, 3b2 in network 1 may exploit the information about the data communication capabilities of the corresponding third connections C3a, C3b towards a corresponding aggregation node 4a, 4b by coordinating parts of the occupied overall transmission spectrum of the wireless connections C1a, C1b, C2a1, C2a2, C2b1, C2b2. In case of in-band backhauling, meaning that first connections C1a, C1b between mobile nodes 2a, 2b and the access points 3a2, 3b2 share the same spectrum like the second connections C2b1, C2b2, C2a1, C2a2 between the access points 3a1, 3a2, 3b1, 3b2 and the corresponding aggregation nodes 4a, 4b, the aforementioned overall spectrum-occupation provides an increasing backhaul-link quality meaning that the connections C2a1, C2a2, C2b1, C2b2 provide enhanced data communication capabilities: The access points 3a1, 3a2, 3b1, 3b2 and aggregation nodes 4a, 4b may negotiate the required data transmission capabilities preferably the bandwidths and the parts of the overall transmission spectrum for data transmission in order to avoid or at least reduce interference ICI between the aggregation nodes 4a, 4b and/or the access points 3a1, 3a2, 3b1, 3b2 and to maximize the end-to-end throughput of the mobile nodes 2a, 2b to the internet 5 via network N2 respectively network N1.

In order to minimize interference between the access points 3a1, 3a2 of network N1 and the access points 3b1, 3b2 of network N2 communication capability information about the data transmission rates of the first, second and third connections C1a, C1b, C2a1, C2a2, C2b1, C2b2, C3a, C3b may be exchanged between the access points 3a1, 3a2 in network N2 and the access points 3b1, 3b2 in network N1.

Further the communication capability information may be exchanged on a higher level between the aggregation nodes 4a, 4b alternatively or additionally. If for example an access point 3a1, 3a2, 3b1, 3b2 collects the data communication capability information this information may be transmitted to the corresponding aggregation node 4a, 4b within the corresponding network N1, N2. The corresponding aggregation node 4a, 4b may then the information to the other access points 3a1, 3a2, 3b1, 3b2 within its network N1, N2 and/or to another aggregation node 4a, 4b to coordinate adaption according the data communication capabilities of the corresponding first, second and third connections C1a, C1b, C2a1, C2a2, C2b1, C2b2, C3a, C3b.

Preferably in case of access points 3a1, 3a2, 3b1, 3b2 being WLAN access points the WLAN access points 3a1, 3a2, 3b1, 3b2 may apply inter-cell interference-coordination opportunistically or coordinated according to the method of one of the claims 1-16. In an opportunistic inter-cell interference-coordination at least two of the access points 3a1, 3a2, 3b1, 3b2 only occupy a minimum number of time-frequency resources required to successfully deliver data to be transmitted. In coordinated inter-cell interference coordination an access point beacon frame which is sent out for a mobile station 2a, 2b to locate the access point 3a2, 3b2 by the mobile station 2a, 2b and which contains control information that can be used by the mobile station 2a, 2b to connect to the corresponding access point 3a2, 3b2, may include two new information blocks: First the so called backhaul-link capacity block and the so called resource allocation block. The resource allocation block contains information about the air medium usage for example time division multiple access or frequency division multiple access and flexibility information indicating a flexibility of the resource allocation by the access point 3a2, 3b2. A definition of the aforementioned flexibility is as follows: The flexibility is high for access points 3a which have not coordinated their interference with other access points 3a1, 3a2, 3b1, 3b2 and restricted otherwise.

In order to collaboratively minimize inter-cell interference each access point may scan each of pregiven WLAN channels of an access point 3a1, 3a2, 3b1, 3b2 which may overlap with the channel currently in use for data transmission, to receive all access point beacon frames from access points 3a1, 3a2, 3b1, 3b2 in its vicinity respectively coverage area which might cause interference. A receiving access point 3a1, 3a2, 3b1, 3b2 may use this information to adjust its own resource allocation to occupy only those resources which will lead to no or very low inter-cell interference, for example by switching to a part of the overall transmission spectrum which does not cause interference with other access points.

If frequency multiple access information are used for inter-cell interference coordination the access points 3a1, 3a2, 3b1, 3b2 need to be time-synchronized. A suitable protocol may be PTBv2 according to IEEE standards IEEE 1588-2008. In case of time division multiple access two access points 3a1, 3a2, 3b1, 3b2 trying to minimize their mutual interference using time division multiple access need to agree on a common PTP master according to an agreement protocol which might be added to 802.11 standards.

If the access points 3a1, 3a2, 3b1, 3b2 are cellular radio access points coordinating the resources in a licensed overall spectrum such as 3GPP LTE, the interference coordination may than be performed via a direct logical connection between multiple access points in form of base stations or HeNBs, preferably via a so called X2 interface. For instance, the base stations may exchange power masks according to the identified data communication capability on the backhaul link. Further the X2 interface may be extended to directly exchange information about the load of individual access points. The access points may based on the load exchange information of parts of the overall transmission spectrum allocate the non-interfered parts of the overall spectrum in order to avoid at least reduce inter-cell interference. This is also applicable to relay nodes as well as to femto-cells of cellular based networks: For instance, if a car is equipped with a relay or femto-cell which provides in-car coverage the backhaul-link from the car to a mobile infrastructure of a mobile service provider is the limiting connection in terms of data transmission rates. Hence, in-car femto-cells may use information about the limited backhaul data transmission capability to coordinate or agree on a simple frequency-reuse plan providing a very simple way for inter-cell interference-coordination and with a reduced amount of signaling exchange for the coordination.

The present invention may be equally applied to technologies using licensed spectrum such as in cellular networks, like 3GPP LTE or IEEE 802.16. In these networks a direct coordination with regard to minimize interference of a different mobile stations preferably through the X2-interface in 3GPP LTE is possible with information of data transmission capabilities of the backhaul-link, for instance if the backhaul-link is a wireless backhaul connection. The present invention may also be applied to networks with high-velocity mobile nodes, for example by using wireless technologies such as IEEE 802.11p, IEEE 802.16 or 3GPP LTE in cars or trains for the purpose of intelligent transport system applications. In these cases the connection having limited data transmission capabilities is the backhaul link between the car or train and the mobile network. The information about the data transmission capability of the backhaul link may be used to coordinate and avoid inter-cell interference between different cars and between different wireless technology maybe used for in-car coverage.

In summary the present invention has inter alia the advantage, that energy especially of the mobile nodes may be saved resulting in extending their lifetime. A further advantage is the reduced required complexity for inter-cell interference coordination. Coordination algorithms are therefore more feasible and may be performed with lower load on the corresponding processor or device. Another advantage is that the pollution of the air medium is reduced due to the reduced power consumption for the output and further due to fewer retransmissions due to the absence of interference.

## Claims

1. A method for data communication in a hierarchically structured network (1) comprising
at least two lower level entities (2a, 2b; 3a1, 3a2, 3b1, 3b2) on a lower level, at least one higher level entity (3a, 3b; 4a, 4b) on a higher level,
wherein each higher level entity (3a, 3b; 4a, 4b) provides lowlink connections (C2a, C2b; C2a1, C2a2, C2b1, C2b2) to each of the lower level entities (2a, 2b; 3a1, 3a2, 3b1, 3b2) and highlink connections (C3a, C3b; C3a, C3b) to at least one further high level entity (5,6)
wherein a lower level entity (2a, 2b; 3a1, 3a2, 3b1, 3b2), the higher level entity (3a, 3b; 4a, 4b) connected to the said low level entity (2a, 2b; 3a1, 3a2, 3b1, 3b2) and the high level entity (5,6) connected to said higher level entity (3a, 3b; 4a, 4b) defines a connection branch,
comprising the steps
a) Determining communication capabilities of the lowlink and highlink connections (C2a, C2b; C2a1, C2a2, C2b1, C2b2; C3a, C3b; C3a, C3b) in each connection branch by inspecting network layer protocol headers for network congestion notification information,
b) Providing communication capability information according to the determined communication capabilities to the lower level entities (2a, 2b; 3a1, 3a2, 3b1, 3b2)
c) Determining the connection in each connection branch having the lower one of the data communication capability, and
d) Adapting the data communication capabilities of the connections in each connection branch according to the determined lower data communication capability.

2. A method according to claim 1, **characterized in that** a highlink connection (C3a, C3b; C3a, C3b) is a backhaul connection, preferably a DSL-connection, having a lower data communication capability compared to a downlink connection (C2a, C2b; C2a1, C2a2, C2b1, C2b2).

3. A method according to one of the claims 1-2, **characterized in that** the determined data communication capabilities are exchanged amongst at least two entities (2a, 2b; 3a, 3b; 3a1, 3a2, 3b1, 3b2; 4a, 4b) on the same level in different connection branches, preferably via a direct link.

4. A method according to one of the claims 1-3, **characterized in that** the communication capability information is included in a DHCP message for the low level entities (2a, 2b; 3a1, 3a2, 3b1, 3b2) and/or in a beacon frame and/or that the communication capability information is provided to a MAC layer optimization algorithm.

5. A method according to one of the claims 1-4, **characterized in that** at least two different spectrum parts of an overall transmission spectrum for connections are determined such that at least two of the lowlink connections (C2a, C2b; C2a1, C2a2, C2b1, C2b2) each provide adapted communication capabilities according to step d) and that each determined spectrum part is assigned to different connections (C2a, C2b; C2a1, C2a2, C2b1, C2b2; C3a, C3b; C3a, C3b), preferably lowlink connections (C2a, C2b; C2a1, C2a2, C2b1, C2b2), preferably wherein spectrum part information is included in the communication capability information.

6. A method according to one of the claims 1-5, **characterized in that** at least the higher level entities (3a, 3b; 4a, 4b) are time-synchronized, preferably by using a PTP-protocol.

7. A method according to one of the claims 1-6, **characterized in that** lowlink and/or highlink connections (C2a, C2b; C2a1, C2a2, C2b1, C2b2; C3a, C3b; C3a, C3b) are provided as wireless connections.

8. A method according to one of the claims 1-7, **characterized in that** at least steps a)-c) are repeated, preferably periodically.

9. A method according to one of the claims 1-8, **characterized in that** the communication capability information includes the maximum sending rate.

10. A method according to one of the claims 1-9, **characterized in that** the communication capability information includes a time, frequency and/or code multiplexing scheme.

11. A method according to one of the claims 7-10, **characterized in that** transmission properties of air interfaces for wireless communication of the lower (2a, 2b; 3a1, 3a2, 3b1, 3b2) and/or higher level entities (3a, 3b; 4a, 4b) are adapted according to the exchanged data communication capabilities.

12. A method according to one of the claims 1-11, that steps a)-d) are performed by at least one centralized entity, wherein the centralized entity is at least on a higher network level.

13. A method according to one of the claims 1-12, **characterized in that** future communication capabilities are calculated based on actual and/or past communication capabilities.

14. System for data communication in a hierarchically structured network, comprising
at least two lower level entities (2a, 2b; 3a1, 3a2, 3b1, 3b2) on a lower level, at least one higher level entity (3a, 3b; 4a, 4b) on a higher level,
wherein each higher level entity (3a, 3b; 4a, 4b) provides lowlink connections (C2a, C2b; C2a1, C2a2, C2b1, C2b2) to each of the lower level entities (2a, 2b; 3a1, 3a2, 3b1, 3b2) and highlink connections (C3a, C3b; C3a, C3b) to at least one further high level entity (5,6)
wherein a lower level entity (2a, 2b; 3a1, 3a2, 3b1, 3b2), the higher level entity (3a, 3b; 4a, 4b) connected to the said low level entity (2a, 2b; 3a1, 3a2, 3b1, 3b2) and the high level entity (5,6) connected to said higher level entity (3a, 3b; 4a, 4b) defines a connection branch,
wherein
at least one of the lower, higher and/or high level entites (2a, 2b, 3a1, 3a2, 3b1, 3b2; 4a, 4b) is operable
to determine communication capabilities of the lowlink and highlink connections (C2a, C2b: C2a1, C2a2, C2b1, C2b2; C3a, C3b; C3a, C3b) in at least one connection branch by inspecting network layer protocol headers for network congestion notification information,
to provide communication capability information according to the determined communication capabilities to the lower level entities (2a, 2b; 3a1, 3a2, 3b1, 3b2),
to determine the connection in each connection branch having the lower one of the data communication capability, and
to adapt the data communication capabilities of the connections in each connection branch according to the determined lower data communication capability.

## Patentansprüche

1. Ein Verfahren zur Datenkommunikation in einem hierarchisch aufgebauten Netzwerk (1) umfassend
zumindest zwei Niedrigere-Ebene-Einheiten (2a, 2b; 3a1, 3a2, 3b1, 3b2) auf einer niedrigeren Ebene,
zumindest eine Höhere-Ebene-Einheit (3a, 3b; 4a, 4b) auf einer höheren Ebene, wobei jede Höhere-Ebene-Einheit (3a, 3b; 4a, 4b) Abwärtsverbindungen (C2a, C2b; C2a1, C2a2, C2b1, C2b2) zu jeder der Niedrigere-Ebene-Einheiten (2a, 2b; 3a1, 3a2, 3b1, 3b2) und Aufwärtsverbindungen (C3a, C3b; C3a, C3b) zu zumindest einer weiteren Obere-Ebene-Einheit (5, 6) bereitstellt, wobei eine Niedrigere-Ebene-Einheit (2a, 2b; 3a1, 3a2, 3b1, 3b2), die Obere-Ebene-Einheit (3a, 3b; 4a, 4b), welche mit der besagten Niedrigere-Ebene-Einheit (2a, 2b; 3a1, 3a2, 3b1, 3b2) verbunden ist und die Obere-Ebene-Einheit (5, 6), die mit besagter Höhere-Ebene-Einheit (3a, 3b; 4a, 4b) verbunden ist, einen Verbindungszweig definiert, umfassend die Schritte
a) Ermitteln von Kommunikationsfähigkeiten von den Abwärts- und Aufwärtsverbindungen (C2a, C2b; C2a1, C2a2, C2b1, C2b2; C3a, C3b; C3a, C3b) in jedem Verbindungszweig durch Prüfen von Netzwerkebene-Protokollköpfen auf Netzwerküberlastungsanzeigeinformationen,
b) Bereitstellen von Kommunikationsfähigkeitsinformationen gemäß der ermittelten Kommunikationsfähigkeiten für die Niedrigere-Ebene-Einheiten (2a, 2b; 3a1, 3a2, 3b1, 3b2),
c) Ermitteln derjenigen Verbindung in jedem Verbindungszweig, die die niedrigere der Datenkommunikationsfähigkeiten aufweist und
d) Anpassen der Datenkommunikationsfähigkeiten von den Verbindungen in jedem Verbindungszweig gemäß der ermittelten niedrigeren Datenkommunikationsfähigkeit.

2. Ein Verfahren gemäß Anspruch 1, **dadurch gekennzeichnet, dass** eine Aufwärtsverbindung (C3a, C3b; C3a, C3b) eine Zubringerverbindung, vorzugsweise eine DSL-Verbindung ist, die eine niedrigere Datenkommunikationsfähigkeit aufweist verglichen mit einer Abwärtsverbindung (C2a, C2b; C2a1, C2a2, C2b1, C2b2).

3. Ein Verfahren gemäß einem der Ansprüche 1-2, **dadurch gekennzeichnet, dass** die ermittelten Datenkommunikationsfähigkeiten unter zumindest zwei Einheiten (2a, 2b; 3a, 3b; 3a1, 3a2, 3b1, 3b2; 4a, 4b) der gleichen Ebene in verschiedenen Verbindungszweigen ausgetauscht werden, vorzugsweise über eine direkte Verbindung.

4. Ein Verfahren gemäß einem der Ansprüche 1-3, **dadurch gekennzeichnet, dass** die Kommunikationsfähigkeitsinformationen in einer DHCP-Nachricht für die Niedrigere-Ebene-Einheiten (2a, 2b; 3a1, 3a2, 3b1, 3b2) eingefügt werden und/oder in einem Leitsignalrahmen und/oder dass die Kommunikationsfähigkeitsinformationen einem MAC-Ebene-Optimierungsalgorithmus zur Verfügung gestellt werden.

5. Ein Verfahren gemäß einem der Ansprüche 1-4, **dadurch gekennzeichnet, dass** zumindest zwei verschiedene Spektrumteile eines Gesamtübertragungsspektrums für Verbindungen ermittelt werden, derart, dass zumindest zwei der Abwärtsverbindungen (C2a, C2b; C2a1, C2a2, C2b1, C2b2) jeweils angepasste Kommunikationsfähigkeiten gemäß Schritt d) bereitstellen und dass jeder ermittelte Spektrumteil verschiedenen Verbindungen (C2a, C2b; C2a1, C2a2, C2b1, C2b2; C3a, C3b; C3a, C3b) zugewiesen wird, vorzugsweise Abwärtsverbindungen (C2a, C2b; C2a1, C2a2, C2b1, C2b2), vorzugsweise wobei Informationen von Spektrumteilen in die Kommunikationsfähigkeitsinformationen eingefügt werden.

6. Ein Verfahren gemäß einem der Ansprüche 1-5, **dadurch gekennzeichnet, dass** zumindest die Höhere-Ebene-Einheiten (3a, 3b; 4a, 4b) zeitsynchronisiert sind, vorzugsweise durch Benutzen eines PTP-Protokolls.

7. Ein Verfahren gemäß einem der Ansprüche 1-6, **dadurch gekennzeichnet, dass** Abwärts- und/oder Aufwärtsverbindungen (C2a, C2b; C2a1, C2a2, C2b1, C2b2; C3a, C3b; C3a, C3b) als Drahtlosverbindungen bereitgestellt werden.

8. Ein Verfahren gemäß einem der Ansprüche 1-7, **dadurch gekennzeichnet, dass** zumindest Schritte a)-c) wiederholt werden, vorzugsweise periodisch.

9. Ein Verfahren gemäß einem der Ansprüche 1-8, **dadurch gekennzeichnet, dass** die Kommunikationsfähigkeitsinformationen die maximale Senderate beinhalten.

10. Ein Verfahren gemäß einem der Ansprüche 1-9, **dadurch gekennzeichnet, dass** die Kommunikationsfähigkeitsinformationen ein Zeit-, Frequenz- und/oder Code-Multiplexschema beinhalten.

11. Ein Verfahren gemäß einem der Ansprüche 7-10, **dadurch gekennzeichnet, dass** Übertragungseigenschaften von Luftschnittstellen für drahtlose Kommunikation von den Niedrigere- (2a, 2b; 3a1, 3a2, 3b1, 3b2) und/oder Höhere-Ebene-Einheiten (3a, 3b; 4a, 4b) angepasst werden gemäß den ausgetauschten Datenkommunikationsfähigkeiten.

12. Ein Verfahren gemäß einem der Ansprüche 1-11, **dadurch gekennzeichnet, dass** Schritte a)-d) von zumindest einer Zentraleinheit durchgeführt werden, wobei die Zentraleinheit zumindest auf einer höheren Netzwerkebene angeordnet ist.

13. Ein Verfahren gemäß einem der Ansprüche 1-12, **dadurch gekennzeichnet, dass** zukünftige Kommunikationsfähigkeiten berechnet werden basierend auf aktuellen und/oder vergangenen Kommunikationsfähigkeiten.

14. System zur Datenkommunikation in einem hierarchisch aufgebauten Netzwerk, umfassend
zumindest zwei Niedrigere-Ebene-Einheiten (2a, 2b; 3a1, 3a2, 3b1, 3b2) auf einer niedrigeren Ebene,
zumindest eine Höhere-Ebene-Einheit (3a, 3b; 4a, 4b) auf einer höheren Ebene, wobei jede Höhere-Ebene-Einheit (3a, 3b; 4a, 4b) Abwärtsverbindungen (C2a, C2b; C2a1, C2a2, C2b1, C2b2) zu jeder der Niedrigere-Ebene-Einheiten (2a, 2b; 3a1, 3a2, 3b1, 3b2) und Aufwärtsverbindungen (C3a, C3b; C3a, C3b) zu zumindest einer weiteren Obere-Ebene-Einheit (5, 6) bereitstellt, wobei eine Niedrigere-Ebene-Einheit (2a, 2b; 3a1, 3a2, 3b1, 3b2), die Obere-Ebene-Einheit (3a, 3b; 4a, 4b), welche mit der besagten Niedrigere-Ebene-Einheit (2a, 2b; 3a1, 3a2, 3b1, 3b2) verbunden ist und die Obere-Ebene-Einheit (5, 6), die mit besagter Höhere-Ebene-Einheit (3a, 3b; 4a, 4b) verbunden ist, einen Verbindungszweig definiert,
wobei zumindest eine der Niedrigere-Ebene-, Höhere-Ebene- und/oder Obere-Ebene-Einheiten (2a, 2b, 3a1, 3a2, 3b1, 3b2; 4a, 4b) ausgebildet ist, um Kommunikationsfähigkeiten von den Abwärts- und Aufwärtsverbindungen (C2a, C2b; C2a1, C2a2, C2b1, C2b2; C3a, C3b; C3a, C3b) in jedem Verbindungszweig durch Prüfen von Netzwerkebene-Protokollköpfen auf Netzwerküberlastungsanzeigeinformationen zu ermitteln,
um Kommunikationsfähigkeitsinformationen gemäß der ermittelten Kommunikationsfähigkeiten für die Niedrigere-Ebene-Einheiten (2a, 2b; 3a1, 3a2, 3b1, 3b2) bereitzustellen,
um diejenige Verbindung in jedem Verbindungszweig zu ermitteln, die die niedrigere der Datenkommunikationsfähigkeiten aufweist und
um Datenkommunikationsfähigkeiten von den Verbindungen in jedem Verbindungszweig gemäß der ermittelten niedrigeren Datenkommunikationsfähigkeit anzupassen.

## Revendications

1. Procédé de communication de données dans un réseau structuré hiérarchiquement (1) comprenant
au moins deux entités de niveau inférieur (2a, 2b ; 3a1, 3a2, 3b1, 3b2) sur un niveau inférieur,
au moins une entité de niveau supérieur (3a, 3b ; 4a, 4b) sur un niveau supérieur,
dans lequel chaque entité de niveau supérieur (3a, 3b ; 4a, 4b) fournit des connexions de liaison faible (C2a, C2b ; C2a1, C2a2, C2b1, C2b2) à chacune des entités de niveau inférieur (2a, 2b ; 3a1, 3a2, 3b1, 3b2) et des connexions de liaison élevée (C3a, C3b ; C3a, C3b) à au moins une entité de niveau élevé supplémentaire (5, 6)
dans lequel une entité de niveau inférieur (2a, 2b ; 3a1, 3a2, 3b1, 3b2), l'entité de niveau supérieur (3a, 3b ; 4a, 4b) connectée à ladite entité de niveau faible (2a, 2b ; 3a1, 3a2, 3b1, 3b2) et l'entité de niveau élevé (5, 6) connectée à ladite entité de niveau supérieur (3a, 3b ; 4a, 4b) définissent une branche de connexion,
comprenant les étapes
a) la détermination de capacités de communication des connexions de liaison faible et de liaison élevée (C2a, C2b ; C2a1, C2a2, C2b1, C2b2 ; C3a, C3b ; C3a, C3b) dans chaque branche de connexion en examinant des en-têtes de protocole de couche de réseau à la recherche d'informations de notification d'encombrement de réseau,
b) la fourniture d'informations de capacité de communication selon les capacités de communication déterminées, aux entités de niveau inférieur (2a, 2b ; 3a1, 3a2, 3b1, 3b2)
c) la détermination de la connexion dans chaque branche de connexion ayant la capacité inférieure des capacités de communication de données, et
d) l'adaptation des capacités de communication de données des connexions dans chaque branche de connexion selon la capacité de communication de données inférieure déterminée.

2. Procédé selon la revendication 1, **caractérisé en ce qu'**une connexion de liaison élevée (C3a, C3b ; C3a, C3b) est une connexion de liaison terrestre, de préférence une connexion DSL, ayant une capacité de communication de données inférieure comparée à une connexion de liaison descendante (C2a, C2b ; C2a1, C2a2, C2b1, C2b2).

3. Procédé selon l'une des revendications 1 et 2, **caractérisé en ce que** les capacités de communication de données déterminées sont échangées parmi au moins deux entités (2a, 2b ; 3a, 3b ; 3a1, 3a2, 3b1, 3b2 ; 4a, 4b) sur le même niveau dans des branches de connexion différentes, de préférence via une liaison directe.

4. Procédé selon l'une des revendications 1 à 3, **caractérisé en ce que** les informations de capacité de communication sont incluses dans un message DHCP pour les entités de faible niveau (2a, 2b ; 3a1, 3a2, 3b1, 3b2) et/ou dans une trame de balise et/ou **en ce que** les informations de capacité de communication sont fournies à un algorithme d'optimisation de couche MAC.

5. Procédé selon l'une des revendications 1 à 4, **caractérisé en ce qu'**au moins deux parties de spectre différentes d'un spectre de transmission global pour des connexions sont déterminées de sorte qu'au moins deux des connexions de liaison faible (C2a, C2b ; C2a1, C2a2, C2b1, C2b2) fournissent chacune des capacités de communication adaptées selon l'étape d) et **en ce que** chaque partie de spectre déterminée est attribuée à des connexions différentes (C2a, C2b ; C2a1, C2a2, C2b1, C2b2 ; C3a, C3b ; C3a, C3b), de préférence des connexions de liaison faible (C2a, C2b ; C2a1, C2a2, C2b1, C2b2), de préférence dans lequel des informations de partie de spectre sont incluses dans les informations de capacité de communication.

6. Procédé selon l'une des revendications 1 à 5, **caractérisé en ce qu'**au moins les entités de niveau supérieur (3a, 3b ; 4a, 4b) sont synchronisées dans le temps, de préférence en utilisant un protocole PTP.

7. Procédé selon l'une des revendications 1 à 6, **caractérisé en ce que** des connexions de liaison faible et/ou de liaison élevée (C2a, C2b ; C2a1, C2a2, C2b1, C2b2 ; C3a, C3b ; C3a, C3b) sont fournies en tant que connexions sans fil.

8. Procédé selon l'une des revendications 1 à 7, **caractérisé en ce qu'**au moins les étapes a) à c) sont répétées, de préférence périodiquement.

9. Procédé selon l'une des revendications 1 à 8, **caractérisé en ce que** les informations de capacité de communication comportent le débit d'envoi maximal.

10. Procédé selon l'une des revendications 1 à 9, **caractérisé en ce que** les informations de capacité de communication comportent un schéma de multiplexage en temps, en fréquence et/ou par code.

11. Procédé selon l'une des revendications 7 à 10, **caractérisé en ce que** des propriétés de transmission d'interfaces radio pour une communication sans fil des entités de niveau inférieur (2a, 2b ; 3a1, 3a2, 3b1, 3b2) et/ou de niveau supérieur (3a, 3b ; 4a, 4b) sont adaptées selon les capacités de communication de données échangées.

12. Procédé selon l'une des revendications 1 à 11, **caractérisé en ce que** les étapes a) à d) sont réalisées par au moins une entité centralisée, dans lequel l'entité centralisée est au moins sur un niveau de réseau supérieur.

13. Procédé selon l'une des revendications 1 à 12, **caractérisé en ce que** des capacités de communication futures sont calculées d'après des capacités de communication actuelles et/ou passées.

14. Système de communication de données dans un réseau structuré hiérarchiquement, comprenant
au moins deux entités de niveau inférieur (2a, 2b ; 3a1, 3a2, 3b1, 3b2) sur un niveau inférieur,
au moins une entité de niveau supérieur (3a, 3b ; 4a, 4b) sur un niveau supérieur,
dans lequel chaque entité de niveau supérieur (3a, 3b ; 4a, 4b) fournit des connexions de liaison faible (C2a, C2b ; C2a1, C2a2, C2b1, C2b2) à chacune des entités de niveau inférieur (2a, 2b ; 3a1, 3a2, 3b1, 3b2) et des connexions de liaison élevée (C3a, C3b ; C3a, C3b) à au moins une entité de niveau élevé supplémentaire (5, 6)
dans lequel une entité de niveau inférieur (2a, 2b ; 3a1, 3a2, 3b1, 3b2), l'entité de niveau supérieur (3a, 3b ; 4a, 4b) connectée à ladite entité de niveau faible (2a, 2b ; 3a1, 3a2, 3b1, 3b2) et l'entité de niveau élevé (5, 6) connectée à ladite entité de niveau supérieur (3a, 3b ; 4a, 4b) définissent une branche de connexion,
dans lequel
au moins l'une des entités de niveau inférieur, supérieur et/ou élevé (2a, 2b ; 3a1, 3a2, 3b1, 3b2 ; 4a, 4b) est opérationnelle
pour déterminer des capacités de communication des connexions de liaison faible et de liaison élevée (C2a, C2b ; C2a1, C2a2, C2b1, C2b2 ; C3a, C3b ; C3a, C3b) dans au moins une branche de connexion en examinant des en-têtes de protocole de couche de réseau à la recherche d'informations de notification d'encombrement de réseau,
pour fournir des informations de capacité de communication selon les capacités de communication déterminées aux entités de niveau inférieur (2a, 2b ; 3a1, 3a2, 3b1, 3b2),
pour déterminer la connexion dans chaque branche de connexion ayant la capacité inférieure des capacités de communication de données, et
pour adapter les capacités de communication de données des connexions dans chaque branche de connexion selon la capacité de communication de données inférieure déterminée.
